(19) Europäisches Patentamt / European Patent Office / Office européen des brevets

(11) **EP 3 968 219 A1**

(12) **DEMANDE DE BREVET EUROPEEN**

(43) Date de publication:
**16.03.2022 Bulletin 2022/11**

(21) Numéro de dépôt: **21196463.0**

(22) Date de dépôt: **14.09.2021**

(51) Classification Internationale des Brevets (IPC):
**G06K 9/00** *(2022.01)*    **G06F 17/18** *(2006.01)*
**G05D 1/02** *(2020.01)*    **G06N 7/00** *(2006.01)*
**B60W 60/00** *(2020.01)*    **G06K 9/62** *(2022.01)*
**G06V 20/58** *(2022.01)*

(52) Classification Coopérative des Brevets (CPC):
**G06F 17/18; B60W 60/00; G06K 9/6288;**
**G06N 7/005; G06V 20/58**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **14.09.2020 FR 2009291**

(71) Demandeur: **Commissariat à l'Energie Atomique et aux Energies Alternatives 75015 Paris (FR)**

(72) Inventeurs:
• **PEREIRA DA SILVA, Alex**
  **38054 GRENOBLE CEDEX 09 (FR)**
• **LEIRENS, Sylvain**
  **38054 GRENOBLE CEDEX 09 (FR)**
• **LESECQ, Suzanne**
  **38054 GRENOBLE CEDEX 09 (FR)**
• **PUSCHINI PASCUAL, Diego**
  **38054 GRENOBLE CEDEX 09 (FR)**

(74) Mandataire: **Marks & Clerk France Immeuble "Visium" 22, avenue Aristide Briand 94117 Arcueil Cedex (FR)**

(54) **PROCÉDÉ ET SYSTÈME DE DÉTECTION COOPÉRATIVE DE CORPS MATÉRIELS DANS UN ENVIRONNEMENT**

(57) [Procédé de détection coopérative de corps matériels($O_1$, $O_2$) dans un environnement mettant en œuvre une pluralité de capteurs de distance équipant des porteurs respectifs ($V_1$, $V_2$, $V_3$), comprenant:

A) pour chaque capteur, l'acquisition d'une série de mesures de distance d'un plus proche corps matériel selon une ligne de vue ; l'application d'un modèle inverse du capteur sur une grille d'occupation locale ($GO_1$, $GO_2$, $GO_3$) ; et la construction d'une grille d'occupation locale consolidée par fusion bayésienne des probabilités d'occupation ainsi déterminées ;

B) le calcul des probabilités d'occupation des cellules d'une grille d'occupation globale ($GO_G$) par fusion bayésienne des probabilités d'occupation de cellules correspondantes d'au moins certaines desdites grilles d'occupation locales consolidées.

Système pour la mise en œuvre d'un tel procédé.

[Fig.12]

**Description**

L'invention porte sur un procédé de détection coopérative de corps matériel dans un environnement, au moyen de capteurs équipant une pluralité de porteurs, dont au moins certains sont mobiles, qui évoluent dans un environnement. La détection est « coopérative » au sens que des données issues de plusieurs capteurs équipant des porteurs distincts sont fusionnées pour créer un modèle de l'environnement. Ce dernier est donc issu de la « coopération » des différents porteurs.

L'invention s'applique d'une manière générale au domaine de la perception et préférentiellement à celui de la navigation de robots, drones, véhicules autonomes, etc.

Il existe deux principales familles de techniques de perception : les méthodes géométriques, qui visent à identifier la géométrie des objets de l'espace environnant, et celles à base de grille d'occupation, qui visent à déterminer si un certain emplacement est occupé par un obstacle (plus généralement, par un corps matériel). L'invention relève des techniques à base de grille d'occupation.

Les fondements théoriques des méthodes de perception basées sur des grilles d'occupation sont décrits dans l'article de (Elfes 1990). L'approche décrite dans cet article permet en particulier la fusion d'informations issues de plusieurs capteurs, qui peuvent ne pas être co-localisés.

L'article (Rakotovao 2016) et la demande de brevet FR 3 041 451 divulguent une méthode permettant d'effectuer de façon efficace mais néanmoins précise, par utilisation d'une arithmétique entière, les calculs de fusion des probabilités d'occupation requis par la méthode de (Elfes 1990).

Les articles (Coué 2006), (Pathak 2007), (Adarve 2012) et la thèse (Fernandez 2015), ainsi que les thèses (Andrada Valente da Silva 2019) et (Trung*Dung 2009) divulguent des perfectionnements de la méthode de (Elfes 1990) et son application à la fusion d'informations issues de plusieurs capteurs, homogènes ou hétérogènes, portés par un même véhicule.

Ces méthodes permettent seulement d'exploiter des mesures issues de capteurs équipant un même porteur, par exemple un véhicule autonome.

Or, dans de nombreuses applications, plusieurs porteurs équipés de capteurs évoluent dans une même région de l'espace ; il suffit de penser, par exemple à plusieurs véhicules automobiles à un carrefour. Conformément à l'art antérieur, ces véhicules calculent chacun une grille d'occupation couvrant une partie limitée de l'environnement. En outre, si l'environnement est dynamique et évolue à une cadence élevée, ou lorsque le porteur se déplace, chaque grille d'occupation devra être recalculée fréquemment pour représenter au mieux l'environnement autour du porteur. Si ce n'est pas le cas, on observera des incertitudes élevées sur l'état d'occupation des cellules de la grille.

L'invention vise à surmonter, au moins en partie, ces inconvénients de l'art antérieur. Plus particulièrement elle vise à améliorer la qualité - en termes d'étendue spatiale et d'incertitude - de la perception de l'environnement dans le cas où plusieurs porteurs équipés de capteurs évoluent dans un environnement, et dont la position est connue au moins de manière approximative (dans le cas de véhicules automobiles, une estimation de la position peut être fournie, par exemple, par un système de positionnement par satellite).

Conformément à l'invention, ce but est atteint par une approche coopérative, dans laquelle les grilles d'occupation « locales » correspondant aux mesures effectuées par les différents porteurs sont fusionnées en une grille d'occupation « globale ». Un aspect important de l'invention est que, lorsque des cellules de différentes grilles locales recouvrent une même zone de l'environnement, les probabilités d'occupation des cellules correspondantes de la grille globale sont calculées par fusion bayésienne des probabilités d'occupation des cellules des grilles locales. Cela permet de réduire l'incertitude sur l'état d'occupation des cellules de la grille locale, en utilisant de manière optimale toute l'information disponible.

Le document (Birk 2006) décrit un procédé coopératif dans lequel plusieurs robots mobiles autonomes acquièrent conjointement une carte de l'environnement dans lequel ils évoluent. Dans ce procédé, les robots évoluent de manière indépendante, explorant différentes régions de l'environnement, avec un certain recouvrement, et en génèrent des cartes locales. Les robots ignorent leurs positions relatives, mais l'identification de régions identiques dans les cartes locales de différents robots permet de les recaler pour parvenir à une carte globale. Le procédé ne permet pas d'affiner de manière coopérative la détermination des probabilités d'occupation des cellules correspondant aux régions de recouvrement des cartes locales. En effet, la notion de probabilité d'occupation n'est pas exploitée : les cellules sont considérées soit occupées avec certitude, soit inoccupées avec certitude, soit dans un état totalement inconnu, auquel cas elles sont ignorées. L'environnement est considéré statique ou quasi-statique. En outre, le procédé ne permet pas d'exploiter une connaissance approximative de la position des différents robots à chaque instant.

Le document EP 3 121 762 décrit un procédé dans lequel un véhicule fusionne les informations fournies par ses propres capteurs avec des données transmises par d'autres véhicules proches, également équipés de capteurs. Ce procédé coopératif n'utilise cependant pas de grilles d'occupation, mais une approche basée sur des caractéristiques (« feature-based » en anglais) qui ne permet pas d'aboutir à une véritable cartographie et nécessite un environnement structuré. Contrairement aux procédés utilisant des grilles d'occupation, cette approche ne permet donc pas de carto-

graphier des environnements inconnus, et d'adresser donc la situation de porteurs évoluant dans un environnement inconnu.

**[0013]** Un objet de l'invention est donc un procédé de détection coopérative de corps matériels dans un environnement mettant en œuvre une pluralité de capteurs de distance équipant des porteurs respectifs situés dans ledit environnement, au moins un desdits porteurs étant mobile, chaque capteur ayant une position et une orientation connues au moins de manière approchée avec un niveau d'incertitude connu, le procédé comprenant:

A) pour chaque capteur, l'acquisition d'une série de mesures de distance d'un plus proche corps matériel selon une ligne de vue ; l'application, à chaque dite mesure de distance, d'un modèle inverse du capteur sur une grille d'occupation locale fournissant une représentation spatiale discrétisée de son champ de vue, pour déterminer une probabilité d'occupation par un corps matériel d'un ensemble de cellules de ladite grille d'occupation ; et la construction d'une grille d'occupation locale consolidée dont chaque cellule présente une probabilité d'occupation calculée par fusion bayésienne des probabilités d'occupation ainsi déterminées ;

B) le calcul des probabilités d'occupation des cellules d'une grille d'occupation globale par fusion bayésienne des probabilités d'occupation de cellules correspondantes d'au moins certaines desdites grilles d'occupation locales consolidées correspondant à des capteurs équipant des porteurs distincts.

**[0014]** Un autre objet de l'invention est un système de détection coopérative de corps matériels comprenant :

- une pluralité de capteurs de distance équipant des porteurs respectifs, au moins un desdits porteurs étant mobile ;
- une pluralité de dispositifs de localisation équipant au moins ledit ou lesdits porteurs mobiles, lesdits dispositifs de localisation étant adaptés pour déterminer une position et une orientation du porteur, ainsi que leurs niveaux d'incertitude ; et
- un système de traitement configuré ou programmé pour :
- pour chaque capteur : acquérir une série de mesures de distance d'un plus proche corps matériel selon une ligne de vue ; appliquer, à chaque dite mesure de distance, un modèle inverse du capteur sur une grille d'occupation locale fournissant une représentation spatiale discrétisée de son champ de vue, pour déterminer une probabilité d'occupation par un corps matériel d'un ensemble de cellules de ladite grille d'occupation ; construire une grille d'occupation locale consolidée dont chaque cellule présente une probabilité d'occupation calculée par fusion bayésienne des probabilités d'occupation ainsi déterminées ; et
- calculer des probabilités d'occupation des cellules d'une grille d'occupation globale par fusion bayésienne des probabilités d'occupation de cellules correspondantes d'au moins certaines desdites grilles d'occupation locales consolidées correspondant à des capteurs équipant des porteurs distincts.

**[0015]** Des modes de réalisation particuliers d'un tel procédé et d'un tel système constituent l'objet des revendications dépendantes.

**[0016]** Les dessins annexés illustrent l'invention :

[Fig.1] représente une grille d'occupation générée par un véhicule équipé d'un capteur de distance ;

[Fig.2] illustre la fusion de deux grilles d'occupation non alignées (définies dans des repères différents et avec des tailles de cellule différentes) conformément à un premier mode de réalisation de l'invention ;

[Fig.3],

[Fig.4]

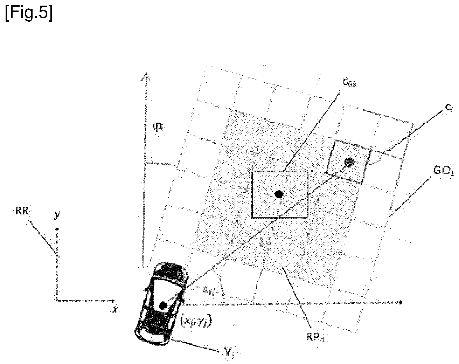

[Fig.5] illustrent la sélection de cellules de la grille d'occupation d'un véhicule « proches » d'une cellule d'une grille d'occupation globale, et la détermination de leur niveau de proximité, selon un deuxième mode de réalisation de l'invention ;

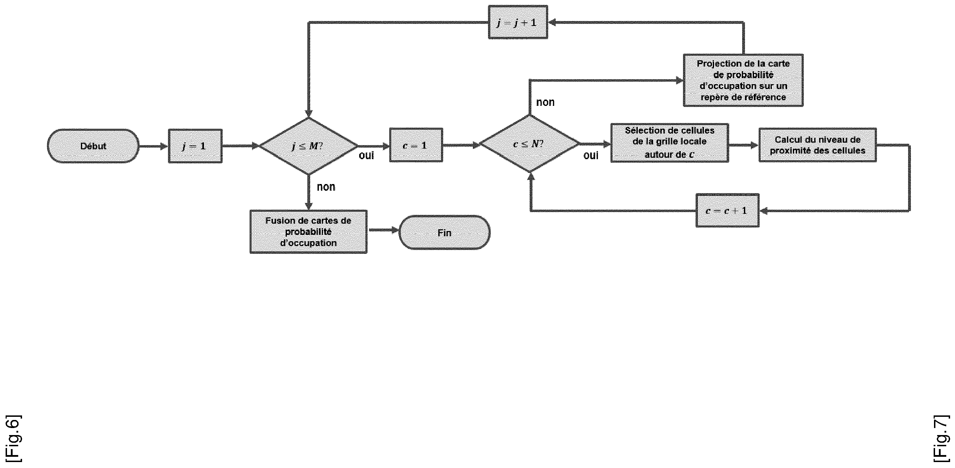

[Fig.6] est un organigramme d'un procédé selon ledit deuxième mode de réalisation de l'invention ;

[Fig.7]

[Fig.8],

[Fig.9]

[Fig.10]

[Fig. 11]

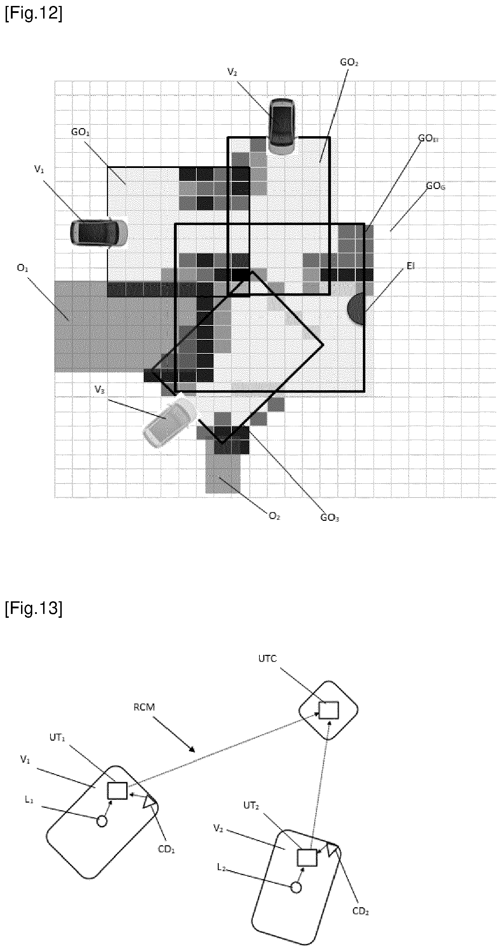

[Fig.12] illustrent les étapes d'un procédé selon un troisième mode de réalisation de l'invention ; et

[Fig.13] est un schéma de principe d'un système selon un quatrième mode de réalisation de l'invention.

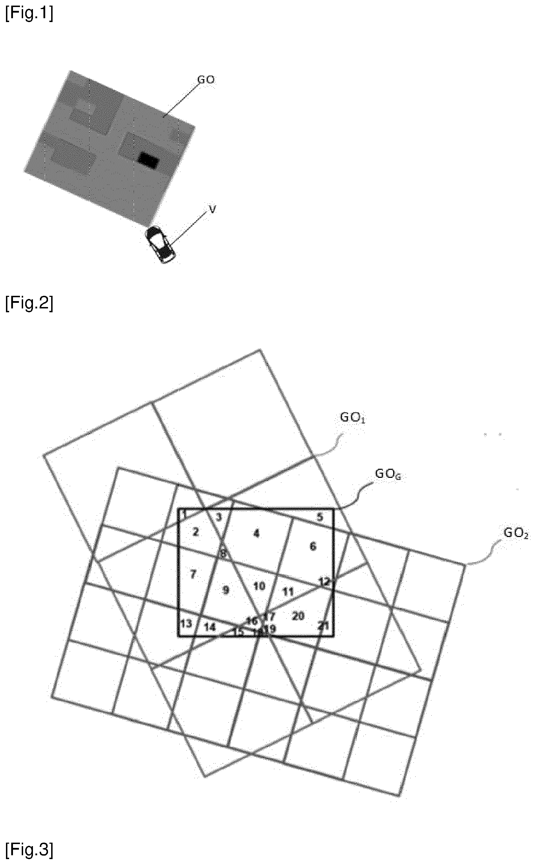

La [Fig. 1] montre une grille d'occupation GO associée à un porteur (ici un véhicule automobile) V. La grille GO est définie dans un repère solidaire du véhicule V et occupe une région de l'environnement qui correspond au moins en partie avec le champ de vue d'un ou plusieurs capteurs de distance embarqués sur le véhicule. La grille constitue une représentation spatiale discrétisée de l'environnement du véhicule, et plus précisément du champ de vue de son ou de ses capteurs de distance. Elle est constituée d'un ensemble de cellules adjacentes, chacune caractérisée par une probabilité d'occupation, c'est-à-dire par la probabilité que la cellule soit occupée par un obstacle. Ces probabilités (représentées sur la figure par des nuances de gris) sont calculées à partir des mesures issues du ou des capteurs, comme expliqué en détail dans l'article (Rakotovao 2016) et la demande de brevet FR 3 041 451 précités. Plus précisément :

- Le (ou chaque) capteur embarqué sur le véhicule V est considéré « incertain ». Cela signifie que si un obstacle se trouve dans une région de l'environnement correspondant à une cellule $c_i$ de la grille d'occupation, alors la mesure de distance z issue du capteur suivra une distribution de probabilité $p(z|o_i)$, où $p(a|b)$ est la densité de probabilité de la variable aléatoire a conditionnée à l'évènement b et $o_i$ représente l'évènement « la région de l'environnement correspondant à la cellule $c_i$ de la grille d'occupation contient un obstacle » (par abus de langage on dira « la cellule $c_i$ est occupée »). La distribution de probabilité $p(z|o_i)$ est appelée le « modèle direct » du capteur.

- A partir du modèle direct du capteur et des probabilités d'occupation a priori des cellules $P(o_i)$ on calcule le « modèle inverse » du capteur $P(o_i|z)$, qui exprime la probabilité que chaque cellule $c_i$ soit occupée, conditionnée à l'acquisition d'une mesure de distance z :

$$P(o_i|z) = \frac{p(z|o_i)P(o_i)}{p(z)}$$

Par exemple, on peut prendre des probabilités a priori $P(o_i)$ identiquement égales à 1/2 , ce qui exprime une incertitude totale. Concrètement, seules les cellules situées sur la ligne de visée du capteur voient leur probabilité d'occupation modifiée par rapport à sa valeur a priori.

Le calcul direct du modèle inverse d'un capteur pour une grille d'occupation déterminée présente une complexité exponentielle par rapport aux dimensions de la grille. L'article (Rakotovao 2016) et la demande de brevet FR 3 041 451 précités enseignent une méthode approchée beaucoup plus efficiente, présentant une complexité linéaire.

- Le modèle inverse, qui est stocké dans une mémoire, est appliqué à chaque mesure issue du (ou de chaque) capteur. En général, plusieurs mesures sont disponibles, issues simultanément ou successivement d'un ou plusieurs capteurs ; il est alors possible de calculer la probabilité d'occupation de chaque cellule par fusion bayesienne de ces mesures.

Si l'on considère deux mesures $z_1$ et $z_2$ on a par exemple :

$$P(o_i|z_1 \wedge z_2) = \frac{P(o_i|z_1)P(o_i|z_2)}{P(o_i|z_1)P(o_i|z_2) + \big(1 - P(o_i|z_1)\big)\big(1 - P(o_i|z_2)\big)}$$

La généralisation à plus de deux capteurs est immédiate - il suffit de considérer $P(o_i|z_1 \wedge z_2)$ comme le modèle inverse d'un capteur « virtuel » et de le fusionner avec la mesure fournie par un troisième capteur, et ainsi de suite. L'équation ci-dessus n'est valable que si $P(o_i) = P(v_i) = 1/2$, où $v_i$ correspond à « l'état de la cellule $c_i$ est vide », mais sa généralisation à d'autres hypothèses est sans difficulté, voir par exemple EP 3 364 213.

D'une manière générale, la fusion de deux probabilités $P_1$, $P_2$ est donnée par

$$F(P_1, P_2) = \frac{P_1 \cdot P_2}{P_1 \cdot P_2 + (1-P_1) \cdot (1-P_2)}.$$

On peut considérer que chaque mesure de distance $z_1$, $z_2$, ... permet de construire une grille d'occupation « provisoire », souvent en n'actualisant que les probabilités d'occupation des cellules situées sur une ligne de visée du capteur de distance, et que la fusion bayesienne de ces grilles conduit à une grille d'occupation « consolidée ». Dans la suite, par « grille d'occupation locale » on entendra, sauf mention contraire, la grille d'occupation consolidée pour un porteur.

La fusion bayesienne nécessite des calculs en virgule flottante, couteux en ressources informatiques ; cependant l'article (Rakotovao 2016) et la demande de brevet FR 3 041 451 précités enseignent une méthode approchée beaucoup plus efficiente, nécessitant uniquement des calculs sur des variables entières.

Une idée à la base de l'invention consiste à construire, de la manière décrite ci-dessus, des grilles d'occupation consolidées pour une pluralité de porteurs, chacun équipé d'un capteur de distance respectif (la généralisation au cas où tous ou certains des porteurs sont équipés de plusieurs capteurs ne pose pas de difficulté), puis de fusionner ces grilles d'occupation - que l'on peut qualifier de « locales » - pour construire une grille d'occupation « globale ». Par exemple, les porteurs peuvent être des véhicules automobiles évoluant sur un réseau routier ainsi que, éventuellement, des éléments d'infrastructure (fixes) tels des feux de signalisation équipés également de capteurs de distance.

La [Fig. 2] illustre la fusion de deux grilles d'occupation locales $GO_1$, $GO_2$ pour engendrer une grille d'occupation globale $GO_G$, donc seule une cellule $c_{Gk}$ est représentée. Typiquement, les grilles d'occupation locales sont calculées par des ordinateurs embarqués sur des porteurs respectifs et transmises par des moyens de communication - par exemple radio - à un ordinateur « central », avec des informations sur la position et l'orientation du porteur (obtenues, par exemple, au moyen d'un système de navigation satellitaire). L'ordinateur central - qui peut être dans une station fixe ou être embarqué sur un porteur équipé de capteurs, qui engendre sa propre grille d'occupation locale - calcule la grille d'occupation globale.

On remarque que, en général, les grilles d'occupation locales ne sont pas alignées car elles présentent des orientations différentes, car elles sont définies dans des référentiels attachés aux porteurs qui se déplacent de manière indépendante. Par ailleurs, comme dans le cas de la figure, elles peuvent présenter des cellules de taille différente. La grille d'occupation globale est définie dans un repère dit de référence.

Selon un premier mode de réalisation de l'invention, illustré sur la [Fig. 2], on identifie à l'intérieur de la cellule $c_{Gk}$ de la grille d'occupation globale plusieurs régions correspondant à des superpositions de différentes cellules des grilles locales $GO_1$, $GO_2$. Ces régions sont numérotées de 1 à 21 sur la figure. Pour chacune de ces régions on détermine une probabilité d'occupation par fusion bayesienne des probabilités d'occupation des cellules locales considérées (pour mémoire, une cellule est considérée « occupée » si un obstacle a été détecté dans cette cellule, sans nécessairement que l'obstacle occupe l'intégralité de la cellule). Puis, on calcule une probabilité d'occupation de la cellule $c_{Gk}$ à partir des probabilités d'occupation de ces régions. Par exemple, on peut considérer que la cellule toute entière prend la probabilité d'occupation la plus élevée parmi celles calculées pour ses régions.

L'inconvénient de cette approche est sa complexité computationnelle : dans l'exemple de la [Fig. 2], une opération de fusion bayesienne est nécessaire pour calculer la probabilité d'occupation de chaque région de la cellule $c_{Gk}$ de la grille globale, soit 21 opérations de fusion bayesienne à calculer pour $c_{Gk}$. Il faut ensuite utiliser un mécanisme qui calcule une valeur unique de probabilité d'occupation pour la cellule $c_{Gk}$, par exemple avec une fonction maximum. Et le nombre d'opérations augmente de manière exponentielle avec celui des grilles d'occupation locales que l'on souhaite fusionner. Un deuxième et un troisième mode de réalisation de l'invention permettent de surmonter cette difficulté.

Le calcul d'une grille d'occupation globale selon un deuxième mode de réalisation est illustré par les [Fig. 3] à [Fig. 6]. Il comprend les étapes suivantes, mises en œuvre pour chaque cellule $c_{Gk}$ de la grille d'occupation globale :

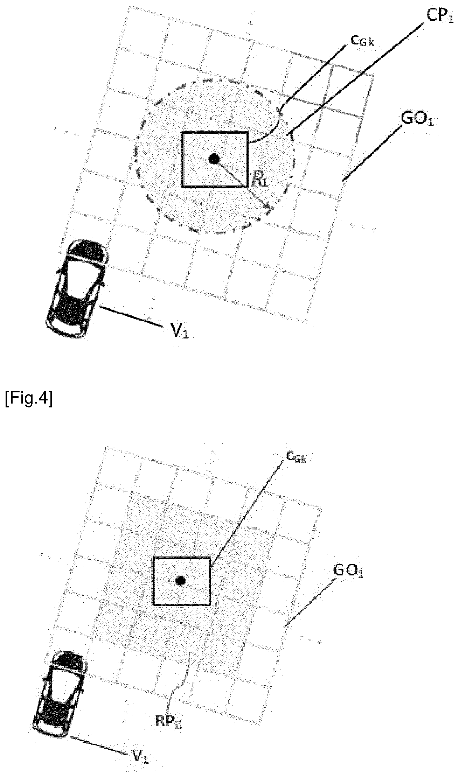

Premièrement, on identifie des cellules de chaque grille d'occupation locale (consolidée) qui peuvent être considérées « proches » - par application d'un critère de proximité prédéfini - avec ladite cellule de la grille d'occupation globale. Seules ces cellules contribuent au calcul de la probabilité d'occupation de $c_{Gk}$. Par exemple, comme illustré sur les [Fig. 3] et [Fig. 4], on peut considérer « proches » de la cellule $c_{Gk}$ les cellules de la grille d'occupation locale $GO_1$ associée au porteur (véhicule) $V_1$ qui se trouvent au moins en partie à l'intérieur d'un cercle $CP_1$ de rayon $R_1$ dont le centre coïncide avec celui de la cellule $c_{Gk}$. Avantageusement, le rayon $R_1$ est d'autant plus grand que l'incertitude sur la position de $V_1$ est élevée (les systèmes de navigation satellitaire, par exemple, permettent non seulement d'estimer une position, mais également de connaître l'incertitude affectant cette estimation). La [Fig. 3] montre le disque de frontière $CP_1$ et la [Fig. 4] montre la région $RP_{i1}$ de la grille d'occupation $GO_1$ formée par les cellules qui intersectent le disque de frontière $CP_1$ et sont donc considérées proches de $c_{Qk}$.

Ensuite, pour chaque cellule de $RP_{i1}$, on calcule un niveau de proximité avec la cellule $c_{Gk}$. Il convient de noter que le critère de proximité utilisé pour identifier les cellules faisant partie de $RP_{i1}$ est binaire - il est satisfait ou ne l'est pas - tandis que le niveau de proximité peut prendre une pluralité de valeurs discrètes ou continues. Par exemple, le niveau de proximité peut être la densité de probabilité normalisée, calculée au centre de la cellule identifiée, ce qui dénote une valeur de probabilité pour que cette cellule coïncide avec le centre de la cellule de la grille d'occupation globale, ou une fonction bornée entre 0 et 1 (typiquement monotone) de cette probabilité. En effet, étant donné que la position et l'orientation du porteur $V_1$ ne sont connues qu'avec une certaine imprécision, la position par rapport à $c_{Gk}$ du centre de chaque cellule de $GO_1$ est décrite par une distribution de probabilité.

Puis, une contribution de la grille d'occupation locale $GO_1$ à la probabilité d'occupation de la cellule $c_{Gk}$ est calculée par moyenne pondérée des probabilités d'occupation des cellules de $RP_{i1}$, les coefficients de pondération étant fonction des niveaux de proximité correspondants (un coefficient est d'autant plus grand que la cellule de $RP_{1i}$ correspondante est proche de $c_{Gk}$ ; par exemple, il peut dépendre de l'inverse du niveau de proximité).

Enfin, les différentes contributions provenant de différentes grilles d'occupation locale sont fusionnées (fusion bayesienne) pour trouver la probabilité d'occupation de la cellule $c_{Gk}$. Pour cela, on peut utiliser par exemple les méthodes décrites dans (Coué 2006), (Pathak 2007), (Adarve 2012), (Fernandez 2015) ou encore, en appliquant avantageusement la technique de « fusion entière » divulguée par (Rakotovao et al. 2016) et WO2017/050890.

Au lieu de procéder cellule par cellule de la grille d'occupation globale, il est possible d'associer à chaque grille d'occupation locale $GO_j$ une grille d'occupation locale intermédiaire, dont la géométrie (position, orientation, nombre, forme et agencement des cellules) est identique à celle de la grille d'occupation globale. La probabilité d'occupation de chaque cellule de la grille d'occupation locale intermédiaire est calculée à partir des probabilités d'occupation des cellules de $GO_j$, comme décrit plus haut. En d'autres termes, on projette les grilles d'occupation locales dans le repère de référence de la grille d'occupation globale. Enfin, toutes les grilles d'occupation locale intermédiaires sont fusionnées pour aboutir à la grille d'occupation globale, ce qui ne pose pas de difficulté car ces grilles sont définies dans le même repère. Les deux approches sont similaires et diffèrent seulement par l'ordre de réalisation des opérations. Dans un cas, on calcule la probabilité d'occupation d'une cellule $c_{gk}$ de la grille d'occupation, en prenant en compte toutes les contributions à la fois. Dans l'autre cas, d'abord on calcule les contributions de chaque grille d'occupation locale à toutes les cellules de la grille d'occupation globale, puis on fusionne ces contributions.

Les calculs nécessités par la mise en œuvre d'un procédé selon ce deuxième mode de réalisation de l'invention seront maintenant décrits plus en détails à l'aide de la [Fig. 5].

Soit un porteur $V_j$ positionné en $(x_j,y_j)$ sur la grille globale et une cellule $c_i$ (sélectionnée au préalable selon la procédure décrite précédemment) de sa grille (locale) de repère j associé au porteur $V_j$, positionnée en $(x_{ij},y_{ij})$ par rapport au repère de référence RR $(x,y)$. Les deux repères diffèrent par une rotation d'un angle $\varphi_j$. On considère que la position d'un porteur est définie par la position d'un point à l'intérieur dudit porteur, par exemple son barycentre, et celle d'une cellule est définie par son centre (en variante, on pourrait aussi choisir un de ses vertex). La relation entre les positions du porteur $V_j$ et de la cellule $c_i$ dans le repère de référence est donnée par les équations

$$x_{ij} = x_j + d_{ij} \cos(\alpha_{ij})$$

$$y_{ij} = y_j + d_{ij} \sin(\alpha_{ij})$$

où $(x_j,y_j)$ est l'estimation de la position du porteur qui peut être modélisée par des variables aléatoires (par exemple des variables gaussiennes de moyenne $(\bar{x}_j,\bar{y}_j)$ et variances ($\sigma^2_{x_j}, \sigma^2_{y_j}$)), et $\alpha_{ij}$ est l'estimation de l'orientation de la droite reliant la position du porteur avec le centre de la cellule $c_i$ dans le repère de référence qui peut également être modélisée par une variable aléatoire (par exemple une variable gaussienne tronquée de moyenne $\bar{\alpha}_{ij}$ de variance $\sigma^2_{\alpha_j}$). La distance $d_{ij}$ entre le porteur et la cellule $c_i$ est considérée constante, car la grille locale qui contient la cellule $c_i$ est attachée au véhicule.

A partir des équations ci-dessus et en connaissant les distributions de probabilité de $x_j, y_j$ et $\alpha_{ij}$, on peut déterminer la distribution de probabilité conjointe des variables $(x_{ij},y_{ij})$, à savoir, $f(x_{ij},y_{ij})$.

Pour déterminer $f(x_{ij},y_{ij})$, on peut utiliser différentes approches : histogramme (numérique), fonction caractéristique, matrice jacobienne, formes différentielles. Si l'on considère par exemple que l'estimation de la position du porteur est modélisée par une variable aléatoire gaussienne de densité de probabilité $f_{xy}(x_j,y_j)$, avec $x_j$ et $y_j$ indépendantes et $\sigma = \sigma_{x_j} = \sigma_{y_j}$, l'orientation du véhicule suit une loi de probabilité gaussienne tronquée donnée par

$$f_\alpha(\alpha_{ij}) = \begin{cases} \dfrac{1}{\sqrt{2\pi}\,\sigma_{\alpha_j} erf\left(\dfrac{\pi}{\sqrt{2}\sigma_{\alpha_j}}\right)} exp\left\{-\dfrac{1}{2\sigma_{\alpha_j}^2}\left(\alpha_{ij} - \bar{\alpha}_{ij}\right)^2\right\} & si\ \ \bar{\alpha}_{ij} - \pi \le \alpha_{ij} \le \bar{\alpha}_{ij} - \pi \\ \\ 0 & c.c. \end{cases}$$

En utilisant les formes différentielles, soit l'élément de probabilité

$$f\big(x_{ij}, y_{ij}, \theta_{ij}\big)\big|dx_{ij} \times dy_{ij} \times d\theta_{ij}\big|,$$

où $\theta_{ij} = \alpha_{ij}$ et $dx_{ij} \times dy_{ij} \times d\theta_{ij}$ est le produit extérieur. On peut déduire que

$$\big|dx_{ij} \times dy_{ij} \times d\theta_{ij}\big| = \big|d\big(x_j + d_{ij}\cos(\alpha_{ij})\big) \times d\big(y_j + d_{ij}\sin(\alpha_{ij})\big) \times d\alpha_{ij}\big| \Rightarrow$$

$$\big|dx_{ij} \times dy_{ij} \times d\theta_{ij}\big| = \big|\big(dx_j - d_{ij}\sin\alpha_{ij}\,d\alpha_{ij}\big) \times \big(dy_j + d_{ij}\cos\alpha_{ij}\,d\alpha_{ij}\big) \times \big(d\alpha_{ij}\big)\big| \Rightarrow$$

$$\big|dx_{ij} \times dy_{ij} \times d\theta_{ij}\big| = \big|dx_j \times dy_j \times d\alpha_{ij}\big| = dx_j dy_j d\alpha_{ij},$$

en prenant en compte la propriété $d\alpha_{ij} \times d\alpha_{ij} = 0$ (i.e. le produit extérieur est alterné). Ainsi, l'élément de probabilité peut être réécrit comme :

$$f\big(x_{ij}, y_{ij}, \theta_{ij}\big)\big|dx_{ij} \times dy_{ij} \times d\theta_{ij}\big| =$$
$$= f\big(x_j + d_{ij}\cos(\alpha_{ij}), y_j + d_{ij}\sin(\alpha_{ij}), \alpha_{ij}\big)\big|dx_{ij} \times dy_{ij} \times d\theta_{ij}\big| =$$
$$= f_{xy}\big(x_j, y_j\big)f_\alpha\big(\alpha_{ij}\big)dx_j dy_j d\alpha_{ij},$$

avec $\alpha_{ij}$ indépendant de $x_j$ et $y_j$. Par conséquence,

$$f\big(x_{ij}, y_{ij}\big) = \int_{-\infty}^{\infty} f\big(x_{ij}, y_{ij}, \theta_{ij}\big)d\theta_{ij} =$$

$$\int_{-\infty}^{\infty} f_{xy}\big(x_{ij} - d_{ij}\cos(\alpha_{ij}), y_{ij} - d_{ij}\sin(\alpha_{ij})\big) f_\alpha\big(\alpha_{ij}\big)d\alpha_{ij} \Rightarrow f\big(x_{ij}, y_{ij}\big) =$$

$$= g\big(x_{ij}, y_{ij}\big) \int_{\bar{\alpha}_{ij}-\pi}^{\bar{\alpha}_{ij}+\pi} exp\left\{\frac{d_{ij}}{\sigma^2}\big[(x_{ij} - \bar{x}_j)\cos\alpha_{ij} + (y_{ij} - \bar{y}_j)\sin\alpha_{ij}\big]\right\} exp\left\{-\frac{1}{2\sigma_{\alpha_j}^2}\big(\alpha_{ij}\right.$$
$$\left. - \bar{\alpha}_{ij}\big)^2\right\}d\alpha_{ij}$$

où

$$g\big(x_{ij}, y_{ij}\big) = \frac{exp\left\{-\frac{1}{2\sigma^2}\big[d_{ij}^2 + (x_{ij} - \bar{x}_j)^2 + (y_{ij} - \bar{y}_j)^2\big]\right\}}{(2\pi)^{3/2}\sigma^2\sigma_{\alpha_j} erf\left(\frac{\pi}{\sqrt{2}\sigma_{\alpha_j}}\right)}.$$

L'intégrale peut être résolue numériquement.

La fonction f($x_{ij}$,$y_{ij}$) permet de quantifier le niveau de proximité entre la cellule $c_i$ de la grille $GO_i$ et la cellule $c_{Gk}$ de la grille globale $GO_G$ (en noir). Plus précisément on définit le niveau de proximité par la valeur

$$\delta_{ijk} = \frac{f\left(x_{ij}=x_{Gk},y_{ij}=y_{Gk}\right)}{\max\left(f\left(x_{ij},y_{ij}\right)\right)},$$

où ($x_{Gk}$,$y_{Gk}$) est la position de la cellule $c_{Gk}$ dans repère de référence. La mesure $\delta_{ijk}$ dénote une probabilité pour laquelle le centre de la cellule $c_i$ de la grille $GO_i$ coïncide avec celui de la cellule $c_{Gk}$ de la grille globale $GO_G$. On détermine le niveau de proximité $\delta_{ijk}$ pour chaque cellule sélectionnée $c_i$ aux alentours de chaque cellule $c_{Gk}$ du repère de référence de porteur $V_j$, comme cela a été expliqué plus haut en référence à la [Fig. 3] et à la [Fig. 4].

Dans le cas d'un porteur fixe (élément d'infrastructure) dont la position est connue avec certitude, on définit directement $\delta_{ijk}$ = 1 pour toutes les cellules sélectionnées. Dans le cas d'un porteur mobile, la normalisation de $\delta_{ijk}$ par le max est nécessaire car f($x_{ij}$ = $x_{Gk}$,$y_{ij}$ = $y_{Gk}$) peut être supérieur à 1 ; sans normalisation on arriverait à la situation paradoxale d'un niveau de proximité supérieur à celui atteignable dans le cas d'un porteur fixe.

Une fois les niveaux de proximité $\delta_{ijk}$ calculés, on procède avec la projection de la probabilité d'occupation dans le repère d'un porteur $V_j$ sur le repère de référence. Soit $P_{ij}$ la probabilité d'occupation de la cellule $c_i$ du repère j, déterminée à partir des capteurs de distances installés sur le porteur ; on définit alors la probabilité d'occupation de la cellule $c_{Gk}$ du repère de référence pour le porteur $V_j$ par :

$$P_{jk} = \frac{\sum_i \delta_{ijk}P_{ij}}{\sum_i \delta_{ijk}}.$$

La probabilité $P_{jk}$ est donc une moyenne pondérée des valeurs de probabilité d'occupation des cellules sélectionnées préalablement dans la grille $GO_i$ dont les poids sont les mesures de proximité de position de ces cellules à l'égard de la cellule $c_{Gk}$ du repère de référence.

Avec cette procédure, on arrive à construire les grilles d'occupation de tous les porteurs dans un même repère avec une complexité de calcul maîtrisée. En particulier, pour réduire le coût de calcul, le résultat de certains calculs intermédiaires pourrait être sauvegardé dans une table. A ce point, la fusion de ces grilles d'occupation ne pose pas de difficulté particulière et peut être réalisée en appliquant avantageusement la technique de « fusion entière » divulguée par (Rakotovao et al. 2016) et WO2017/050890.

La [Fig. 6] représente un organigramme d'un procédé selon le deuxième mode de réalisation de l'invention. Le procédé de la figure se rapporte à une situation où M porteurs $V_j$ (identifiés par l'indice j, j prenant les valeurs de 1 à M) fournissent chacun une grille d'occupation locale. La grille d'occupation globale comprend N cellules c. Pour chaque porteur (boucle d'itération sur j), on projette la grille d'occupation locale correspondante sur une grille d'occupation locale intermédiaire ayant la même géométrie que la grille d'occupation globale (boucle d'itération imbriquée sur chaque cellule c) ; puis on procède à la fusion des grilles d'occupation locale intermédiaires. Comme expliqué plus haut, en variante, on pourrait aussi procéder différemment en considérant les cellules de la grille d'occupation globale une par une et, pour chacune d'entre elles, en calculant et fusionnant les contributions à la probabilité d'occupation provenant de toutes les grilles locales d'occupation.

Dans le deuxième mode de réalisation de l'invention qu'on vient de décrire, chaque porteur (ou plus précisément l'ordinateur embarqué dans chaque porteur) génère une grille d'occupation locale dans son propre repère et la transmet à l'ordinateur central, qui projette toutes ces grilles locales dans un repère de référence pour les fusionner et obtenir la grille d'occupation globale. Dans le troisième mode de réalisation, l'orientation et la position du repère de référence sont transmises par l'ordinateur central aux porteurs, qui génèrent alors directement leurs grilles d'occupation locales dans ce repère. Les grilles d'occupation locales ainsi générées peuvent ensuite être envoyées à l'ordinateur central qui les fusionne.

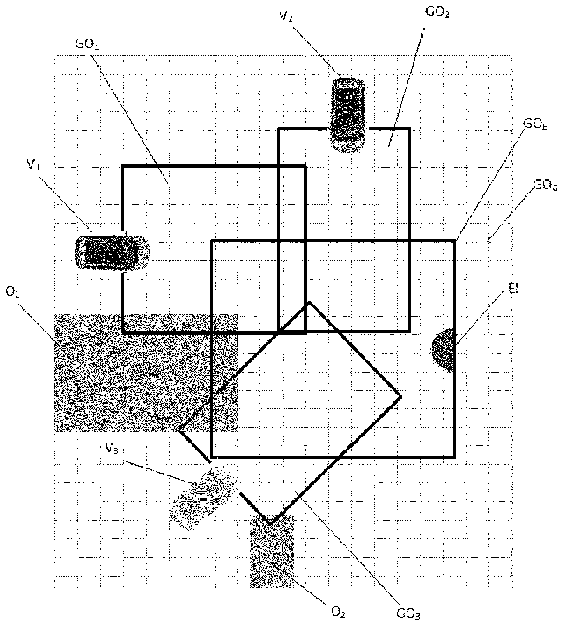

La [Fig. 7] montre trois porteurs mobiles (voitures) $V_1$, $V_2$, $V_3$ et un porteur fixe (élément d'infrastructure) EI avec des grilles d'occupation locales respectives $GO_1$, $GO_2$, $GO_3$ $GO_{EI}$ « vides », c'est-à-dire avant que les probabilités d'occupation de leurs cellules n'aient été calculées. Deux obstacles $O_1$, $O_2$ sont également présents. Un ordinateur central, par exemple co-localisé avec l'élément d'infrastructure EI, transmet aux ordinateurs embarqués sur les porteurs mobiles (et, le cas échéant, sur l'élément d'infrastructure) les données qui définissent un repère global : une origine et les orientations des axes $x_G$, $y_G$. Une grille d'occupation globale $GO_G$ - elle aussi « vide » - est représenté sur la figure par un quadrillage.

Chaque porteur mobile détermine, par exemple au moyen d'un système de navigation satellitaire, sa position par rapport à l'origine du repère global, ainsi que l'incertitude affectant sa position (pour un porteur statique tel EI, la position est supposée connue sans incertitude). Une distribution de probabilité de la position du porteur $V_i$ numéro « i » $p(x_i, y_i)$ peut donc être calculée, par exemple en faisant l'hypothèse que cette distribution suit une loi normale multidimensionnelle.

L'ordinateur embarqué dans chaque porteur reçoit une succession de mesures de distance et s'en sert pour calculer la grille d'occupation locale, en utilisant le modèle inverse du capteur de distance et la probabilité de position $p(x_i, y_i)$. On tient donc compte de l'incertitude sur la position.

Soit $z^{t-1}$ la suite de mesures de distance $\{z_i, ...z_{t-1}\}$ acquises avant l'instant t et z la mesure acquise au temps t. On désigne par P $(o_j|z, z^{t-1})$ la probabilité que la cellule « j » de la grille d'occupation soit occupée, conditionnée par les mesures z et $z^{t-1}$. On démontre que :

$$P(o_i|z, z^{t-1}) = \frac{P(o_i|z)P(o_i|z^{t-1})}{P(o_i|z)P(o_i|z^{t-1}) + \left(1 - P(o_i|z)\right)\left(1 - P(o_i|z^{t-1})\right)}$$

avec

$$P(o_i|z) = \sum_{x_i, y_i} P(o_i|z, x_i, y_i)P(x_i, y_i)$$

où $P(o_i|z,x_i,y_i)$ est le modèle inverse du capteur, calculé en supposant que la position du porteur soit $(x_i, y_i)$, $P(x_i, y_i)$ est la probabilité que la position du porteur soit effectivement $(x_i, y_i)$ et la somme est calculée sur toutes les positions possibles (on considère ici que $x_i$ et $y_i$ prennent seulement des valeurs discrètes, ce qui justifie le passage d'une densité de probabilité - représentée par un « p » minuscule - à une probabilité représentée par un « P » majuscule).

On a considéré ici uniquement l'incertitude sur la position du porteur, mais l'incertitude sur son orientation peut être prise en considération de la même manière (on peut parler de « pose » pour désigner à la fois la position et l'orientation d'un porteur).

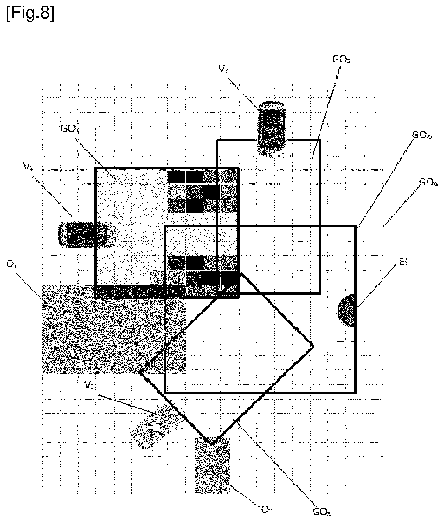

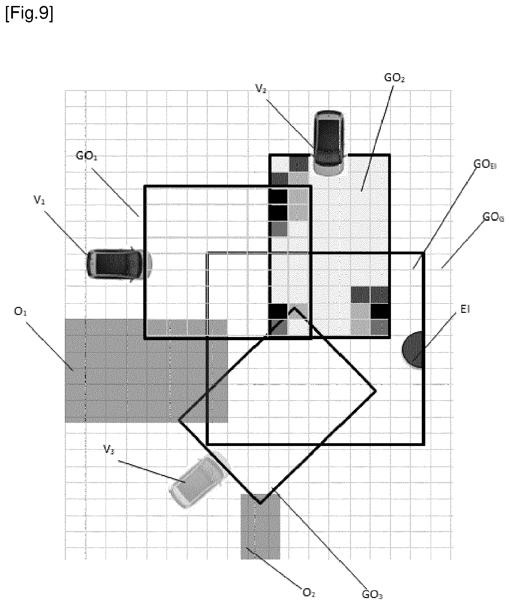

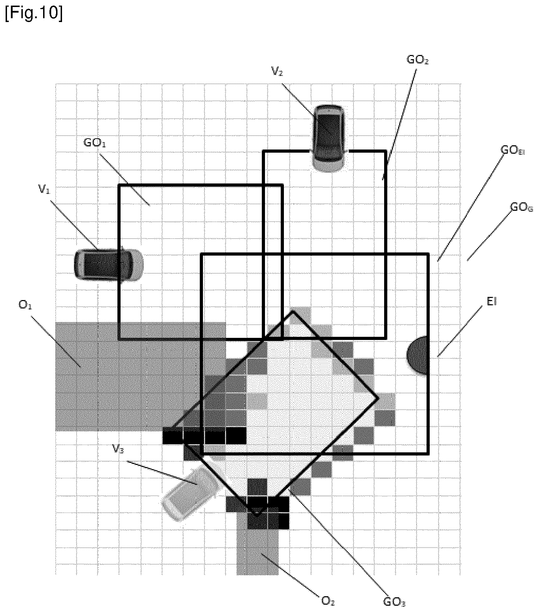

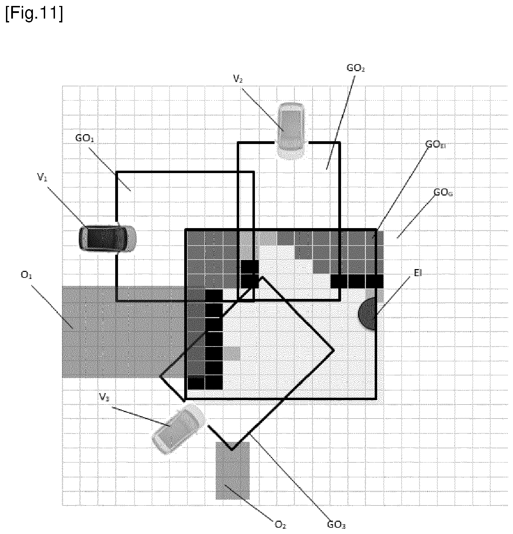

Les [Fig. 8], [Fig. 9], [Fig. 10] et [Fig. 11] montrent les grilles d'occupation locale $GO_1$, $GO_2$, $GO_3$ et $GO_{EI}$ des porteurs $V_1$, $V_2$, $V_3$ et EI, respectivement. On remarque, dans le cas de $V_3$, que les cellules de la grille d'occupation locale sont alignées sur le repère de référence, et non sur celui du porteur. La [Fig. 12] montre la grille d'occupation globale $GO_G$ obtenue par fusion.

Quel que soit le mode de réalisation considéré, la grille d'occupation globale peut être transmise par l'ordinateur central aux ordinateurs embarqués. L'ordinateur central, par ailleurs, n'est pas nécessairement « fixe » : il est possible d'utiliser en tant qu'ordinateur central un ordinateur embarqué sur un porteur.

L'invention a été décrite en considérant des grilles d'occupation bidimensionnelles, mais la généralisation au cas tridimensionnel ne pose pas de difficulté.

L'invention a été décrite en considérant le cas où chaque porteur est équipé d'un seul capteur de distance, mais la généralisation au cas où au moins certains porteurs sont équipés de plusieurs capteurs ne pose pas de difficulté.

Bien que cela ne soit pas essentiel, il est avantageux d'appliquer la technique de « fusion entière » divulguée par (Rakotovao et al. 2016) et WO2017/050890, qui est brièvement rappelée ci-après.

L'idée à la base de cette technique est que, bien que les probabilités à fusionner puissent en principe prendre n'importe quelle valeur dans l'intervalle [0, 1], en pratique les calculs sont nécessairement effectués sur des valeurs discrètes. Par conséquent, une probabilité dans l'intervalle [0, 1] doit nécessairement être représentée de manière discrétisée, par des « classes de probabilité » qui peuvent être identifiées par des indices entiers. Un sous-ensemble dénombrable de l'intervalle [0, 1] dont les éléments $p_n$ sont identifiés par un indice entier relatif « n » est appelé un « système de classes de probabilités » $S = \{p_n, n \in \mathbb{Z}\}$. Certains systèmes de classes de probabilités ont la propriété que la fusion de deux classes de probabilité quelconques du système appartient, elle aussi, au système. Formellement $\forall p_i, p_j \in S, F(p_1, p_2) \in S$. On parle dans ce cas de « systèmes de classes sans erreurs » car l'opération de fusion n'introduit aucune erreur ou approximation (la discrétisation, cependant, est une approximation). L'intérêt de ces classes est que le résultat de la fusion est également identifié par un indice entier. Le problème de la fusion de probabilité se réduit donc à déterminer une fonction $F_d$ qui associe à une paire d'indices entiers un autre indice entier. Des opérations en virgule flottante sur des valeurs de probabilité sont donc remplacées par des opérations entières sur des indices.

Un schéma de discrétisation avantageux est basé sur un ensemble dénombrable de classes de probabilité $S_k$ donné par l'union des deux sous-ensembles suivants :

$$S_k^- = \left\{ \frac{1}{2 - k \cdot n}, n \leq 0 \right\}$$

$$S_k^+ = \left\{ \frac{k \cdot n + 1}{k \cdot n + 2}, n \geq 0 \right\}$$

où k est un entier positif $(k \in \mathbb{N}^*)$ . $S_k$ discrétise l'intervalle [0, 1] de manière non uniforme, avec un intervalle de discrétisation qui est relativement grand autour de la valeur 0,5 et de plus en plus petit lorsqu'on s'approche des valeurs extrêmes 0 et 1. Cela est doublement avantageux ; en effet :

- Une probabilité de 0,5 correspond à une incertitude totale ; il n'est donc pas très utile d'être précis autour d'une telle valeur ; par contre, il est utile d'être précis autour des valeurs extrêmes qui correspondent à des quasi-certitudes de non-occupation (0) ou d'occupation (1).
- au-delà d'une certaine valeur de |n|, les valeurs discrètes de probabilité deviennent extrêmement proches les unes des autres ; l'erreur introduite en tronquant l'ensemble est donc négligeable.

Bien que $S_k$ ne soit pas un système sans erreurs, Sk+ et Sk- le sont.
Un autre système de quantification utile, sans erreurs, est défini par récursion :

[0089] $p_0$=0,5 ;

$p_1$=p ;

$p_2$=F(p,p);

$p_3$=F($p_2$,p);

…

$p_{n+1}$=F($p_n$,p)

$p_{-1}$=1-p ;

$p_{-2}$=F($p_{-1}$, $p_{-1}$);

$p_{-3}$=F($p_{-2}$, $p_{-1}$);

…

$p_{n-1}$=F($p_n$, $p_{-1}$)

où "p" est un paramètre tel que 0,5<p<1 et

$$F(p_i, p_j) = \frac{p_i p_j}{p_i p_j + (1 - p_i)(1 - p_j)}.$$

La [Fig. 13] représente très schématiquement un système pour la mise en œuvre d'un procédé selon l'invention. Le système comprend des capteurs de distance $CD_1$, $CD_2$, des dispositifs de localisation $L_1$, $L_2$ et des ordinateurs (plus généralement des unités de traitement locales) $UT_1$, $UT_2$, équipant des porteurs respectifs $V_1$, $V_2$. Les capteurs de distance et les dispositifs de localisation fournissent à l'unité de traitement du porteur les mesures de distance et informations de position et orientation nécessaires pour construire les grilles d'occupation locales. Les unités de traitement locales échangent des données avec une unité de traitement centrale UTC par l'intermédiaire d'un réseau de communications RCM, typiquement sans fil. L'unité de traitement centrale UTC construit une grille d'occupation globale à partir des grilles d'occupation locale et de la position des porteurs $V_1$ et $V_2$.

Les unités de traitements locales et globale peuvent être des ordinateurs, des microprocesseurs ou microcontrôleurs, des circuits numériques dédiés ou programmables etc., programmés ou configurés pour mettre en œuvre les traitements décrits plus haut. Les dispositifs de localisation peuvent être ou comprendre des récepteurs de signaux de navigation satellitaire, des centrales inertielles etc.

Références bibliographiques

Elfes 1990 : A. Elfes, "Occupancy grids: a stochastic spatial représentation for active robot perception" (Sixth Conférence on Uncertainty in AI, 1990).

Rakotovao 2016 : T Rakotovao, J Mottin, D Puschini, C Laugier, "Multi-sensor fusion of occupancy grids based on integer arithmetic", Robotics and Automation (ICRA), 2016 IEEE International Conférence on, 1854-1859.

Coué 2006 : Coué, C., Pradalier, C., Laugier, C., Fraichard, T. and Bessière, P. "Bayesian Occupancy Filtering for Multitarget Tracking: An Automotive Application". The International Journal of Robotics Research, Janvier 2006.

Pathak 2007 : Pathak, K., Birk, A., Poppinga, J., and Schwertfeger, S., "3D forward sensor modeling and application to occupancy grid based sensor fusion". IEEE/RSJ International Conférence on Intelligent Robots and Systems, Décembre 2007.

Adarve 2012 : Adarve, J. D., Perrollaz, M., Makris, A. and Laugier, C. "Computing Occupancy Grids from Multiple Sensors using Linear Opinion Pools". IEEE International Conférence on Robotics and Automation, Mai 2012.

Fernandez 2015 : Fernandez, C. G. D. P., "Grid-based multi-sensor fusion for on-road obstacle detection: application to autonomous driving". Thèse de Master, KTH-CVAP et Volvo Car Corporation, Août 2015.

Birk 2006 : Birk, A, and Carpin, S.; "Merging occupancy grid maps from multiple robots"; Proceedings of the IEEE, s vol. 94, no 7, pp. 1384-1397, Juillet 2006.

(Andrada Valente da Silva 2019) « SLAM and data fusion for autonomous vehicles : from classical approaches to deep lerning methods », Université Paris Sciences et Lettres, 18 mars 2019.

(Trung-Dung 2009) »Vehicle Perception : Localization, Mapping with Detection, Classification and Tracking of Moving Objects », Institut National polytechnique de Grenoble, 18 septembre 2009.

**Revendications**

**1.** Procédé de détection coopérative de corps matériels ($O_1$, $O_2$) dans un environnement mettant en œuvre une pluralité de capteurs de distance ($CD_1$, $CD_2$) équipant des porteurs respectifs ($V_1$, $V_2$) situés dans ledit environnement, au moins un desdits porteurs étant mobile, chaque capteur ayant une position et une orientation connues au moins de manière approchée avec un niveau d'incertitude connu, le procédé comprenant:

A) pour chaque capteur, l'acquisition d'une série de mesures de distance d'un plus proche corps matériel ($O_1$, $O_2$) selon une ligne de vue ; l'application, à chaque dite mesure de distance, d'un modèle inverse du capteur sur une grille d'occupation locale fournissant une représentation spatiale discrétisée de son champ de vue, pour déterminer une probabilité d'occupation par un corps matériel d'un ensemble de cellules de ladite grille d'occupation ; et la construction d'une grille d'occupation locale consolidée ($GO_1$, $GO_2$) dont chaque cellule présente une probabilité d'occupation calculée par fusion bayésienne des probabilités d'occupation ainsi déterminées ;

B) le calcul des probabilités d'occupation des cellules d'une grille d'occupation globale ($GO_G$) par fusion bayésienne des probabilités d'occupation de cellules correspondantes d'au moins certaines desdites grilles d'occupation locales consolidées correspondant à des capteurs équipant des porteurs distincts.

**2.** Procédé selon la revendication 1 dans lequel l'étape B) comprend, pour chaque cellule ($c_{Gi}$) de la grille de probabilité globale:

b1) l'identification d'un sous-ensemble de cellules ($RP_{i1}$) de chaque grille d'occupation locale consolidée ($GO_1$) satisfaisant une condition de proximité avec ladite cellule de la grille d'occupation globale ;

b2) le calcul d'un niveau de proximité de chaque cellule ainsi identifiée avec ladite cellule de la grille d'occupation globale ;

b3) pour chaque grille d'occupation locale, le calcul d'une contribution à la probabilité d'occupation par moyenne pondérée des probabilités d'occupation des cellules identifiées lors de la sous-étape b1), les coefficients de pondération étant fonction des niveaux de proximité correspondants ; et

b4) la fusion bayésienne des contributions aux probabilités d'occupation calculés lors de la sous-étape b3).

**3.** Procédé selon la revendication 2 dans lequel la sous-étape b1) comprend l'identification des cellules de chaque grille d'occupation locale consolidée qui se trouvent en tout ou en partie à l'intérieur d'une région d'un rayon donné ($R_1$), centrée sur la cellule de la grille de probabilité globale.

**4.** Procédé selon la revendication 3 dans lequel ledit rayon est d'autant plus grand que l'incertitude sur la position du capteur correspondant à la grille d'occupation locale consolidée est élevée.

**5.** Procédé selon l'une quelconque des revendications 2 à 4 dans lequel le niveau de proximité calculé lors de la sous-étape b2) est représentatif de la densité de probabilité que le centre de la cellule identifiée coïncide avec le centre de la cellule de la grille d'occupation globale.

**6.** Procédé selon l'une quelconque des revendications précédentes dans lequel l'étape A) est mise en œuvre par une pluralité d'unités de traitement locales ($UT_1$, $UT_2$), associée chacune à un porteur ($V_1$, $V_2$) et l'étape B) est mise en œuvre par une unité de traitement centrale (UTC), le procédé comprenant également la transmission des grilles d'occupation locales consolidées desdits capteurs à ladite unité de traitement centrale.

**7.** Procédé selon la revendication 1 comprenant une étape préalable de détermination d'une position de référence et d'une orientation définissant un repère global de référence (RR), dans lequel l'étape A) comprend, pour chaque capteur, la construction d'une dite grille d'occupation locale consolidée alignée et localisée dans le repère global de référence, les valeurs de probabilité d'occupation de ladite grille d'occupation locale consolidée étant calculées en prenant en compte l'incertitude sur la position et l'orientation du capteur.

**8.** Procédé selon la revendication 7 dans lequel un capteur présente une position et une orientation fixes et connues sans incertitude, prises comme position de référence et comme orientation du repère global de référence.

**9.** Procédé selon l'une quelconque des revendications 7 ou 8 dans lequel :

- une unité de traitement centrale (UTC) détermine la position de référence et l'orientation définissant un repère global de référence (RR) et les transmets à une pluralité d'unité de traitement locales ($UT_1$, $UT_2$), associées chacune à un porteur ;
- l'étape A) est mise en œuvre par lesdites unités de traitement locales ;
- les grilles d'occupation locales consolidées sont transmises par les unités de traitement locales à l'unité de traitement centrale ; et
- l'étape B) est mise en œuvre par ladite unité de traitement centrale.

**10.** Procédé selon l'une des revendications précédentes, dans lequel chaque dit modèle inverse de capteur est un modèle discret, associant à chaque cellule de la grille d'occupation correspondante, et pour chaque mesure de distance, une classe de probabilité choisie à l'intérieur d'un même ensemble de cardinalité finie, chaque dite classe de probabilité étant identifiée par un indice entier ; les opérations de fusion bayésienne de probabilité étant effectuées au moyen de calculs entiers effectués sur les indices des classes de probabilités déterminées lors de ladite étape b).

**11.** Système de détection coopérative de corps matériels comprenant :

- une pluralité de capteurs de distance ($CD_1$, $CD_2$) équipant des porteurs respectifs ($V_1$, $V_2$), au moins un desdits porteurs étant mobile ;
- une pluralité de dispositifs de localisation ($L_1$, $L_2$) équipant au moins ledit ou lesdits porteurs mobiles, lesdits dispositifs de localisation étant adaptés pour déterminer une position et une orientation du porteur, ainsi que leurs niveaux d'incertitude ; et
- un système de traitement ($UT_1$, $UT_2$, UTC) configuré ou programmé pour :
- pour chaque capteur : acquérir une série de mesures de distance d'un plus proche corps matériel ($O_1$, $O_2$) selon une ligne de vue ; appliquer, à chaque dite mesure de distance, un modèle inverse du capteur sur une grille d'occupation locale fournissant une représentation spatiale discrétisée de son champ de vue, pour déterminer une probabilité d'occupation par un corps matériel d'un ensemble de cellules de ladite grille d'occupation ; construire une grille d'occupation locale consolidée ($OG_1$, $OG_2$) dont chaque cellule présente une probabilité d'occupation calculée par fusion bayésienne des probabilités d'occupation ainsi déterminées ; et
- calculer des probabilités d'occupation des cellules d'une grille d'occupation globale ($OG_G$) par fusion bayésienne des probabilités d'occupation de cellules correspondantes d'au moins certaines desdites grilles d'occupation locales consolidées correspondant à des capteurs équipant des porteurs distincts.

**12.** Système selon la revendication 11 dans lequel le système de traitement comprend une pluralité d'unités de traitement locales (UT$_1$, UT$_2$), associées chacune à un porteur, une unité de traitement centrale (UTC) et un réseau de communication (RCM) reliant l'unité de traitement centrale à chaque unité de traitement locale, et dans lequel :

- chaque unité de traitement locale est configurée ou programmée pour construire une dite grille d'occupation locale consolidée et la transmettre à l'unité de traitement centrale ; et
- l'unité de traitement centrale est configurée ou programmée pour calculer les probabilités d'occupation des cellules de ladite grille d'occupation globale.

**13.** Système selon la revendication 12 dans lequel l'unité de traitement centrale (UTC) est configurée ou programmée pour, pour chaque cellule (c$_{Gi}$) de la grille d'occupation globale:

- identifier un sous-ensemble (RP$_{i1}$) de cellules de chaque grille d'occupation locale consolidée satisfaisant une condition de proximité avec ladite cellule de la grille d'occupation globale ; et
- calculer un niveau de proximité de chaque cellule ainsi identifiée avec ladite cellule de la grille d'occupation globale ;
- pour chaque grille d'occupation locale, calculer une probabilité d'occupation par moyenne pondérée des probabilités d'occupation des cellules identifiés, les coefficients de pondération étant fonction des niveaux de proximité correspondants ; et
- effectuer la fusion bayésienne des probabilités ainsi calculées.

**14.** Système selon la revendication 12 dans lequel l'unité de traitement centrale (UTC) est configurée ou programmée pour déterminer une position de référence et une orientation définissant un repère global de référence (RR), et les transmettre aux unités de traitement locales (UT$_1$, UT$_2$) ; et chaque unité de traitement locale est configurée ou programmée pour construire une dite grille d'occupation locale consolidée alignée et localisée dans le repère global de référence, et calculer des valeurs de probabilité d'occupation de ladite grille d'occupation locale consolidée en prenant en compte l'incertitude sur la position et l'orientation du capteur respectif.

[Fig.1]

[Fig.2]

[Fig.3]

$CP_1$

$c_{Gk}$

$GO_1$

$R_1$

$V_1$

[Fig.4]

$c_{Gk}$

$GO_1$

$RP_{i1}$

$V_1$

[Fig.5]

[Fig.6]

[Fig.7]

[Fig.8]

[Fig.9]

[Fig.10]

[Fig.11]

[Fig.12]

[Fig.13]

| | Europäisches Patentamt European Patent Office Office européen des brevets | **RAPPORT DE RECHERCHE EUROPEENNE** | **Numéro de la demande** **EP 21 19 6463** |
| --- | --- | --- | --- |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
| --- | --- | --- | --- |
| X | Andrade Valente Da Silva Michelle: "SLAM and data fusion for autonomous vehicles : from classical approaches to deep learning methods", PhD Thesis, 18 décembre 2019 (2019-12-18), pages 1-172, XP055807979, Extrait de l'Internet: URL:https://pastel.archives-ouvertes.fr/te l-03167034/file/2019PSLEM079_archivage.pdf [extrait le 2021-05-27] * pages 14, 24, 72, 74 et 75 * ----- | 1-14 | INV. G06K9/00 G06F17/18 G05D1/02 G06N7/00 B60W60/00 G06K9/62 G06V20/58 |
| X | Trung-Dung Vu: "Vehicle Perception: Localization, Mapping with Detection, Classification and Tracking of Moving Objects", PhD-Thesis, 18 septembre 2009 (2009-09-18), XP055154102, Extrait de l'Internet: URL:https://hal.archives-ouvertes.fr/tel-0 0454238/document [extrait le 2014-11-20] * section 3.2.3 * ----- | 1-14 | |
| A | Carlos Gálvez Del Postigo Fernández ET AL: "Grid-Based Multi-Sensor Fusion for On-Road Obstacle Detection: Application to Autonomous Driving", , août 2015 (2015-08), XP055555247, Extrait de l'Internet: URL:https://www.diva-portal.org/smash/get/ diva2:852457/FULLTEXT01.pdf * le document en entier * ----- -/-- | 1-14 | DOMAINES TECHNIQUES RECHERCHES (IPC) G06F G06K G05D G06N |

Le présent rapport a été établi pour toutes les revendications

| Lieu de la recherche **Berlin** | Date d'achèvement de la recherche **25 janvier 2022** | Examinateur **Huguet Serra, G** |
| --- | --- | --- |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.................................................
& : membre de la même famille, document correspondant

EPO FORM 1503 03.82 (P04C02)

page 1 de 2

Europäisches
Patentamt

European
Patent Office

Office européen
des brevets

## RAPPORT DE RECHERCHE EUROPEENNE

Numéro de la demande

**EP 21 19 6463**

| **DOCUMENTS CONSIDERES COMME PERTINENTS** | | | |
|---|---|---|---|
| Catégorie | Citation du document avec indication, en cas de besoin, des parties pertinentes | Revendication concernée | CLASSEMENT DE LA DEMANDE (IPC) |
| A | WANG ZHANGJING ET AL: "Multi-Sensor Fusion in Automated Driving: A Survey", IEEE ACCESS, IEEE, USA, vol. 8, 26 décembre 2019 (2019-12-26), pages 2847-2868, XP011766201, DOI: 10.1109/ACCESS.2019.2962554 * le document en entier * ----- | 1-14 | |
| A,D | RAKOTOVAO TIANA ET AL: "Multi-sensor fusion of occupancy grids based on integer arithmetic", 2016 IEEE INTERNATIONAL CONFERENCE ON ROBOTICS AND AUTOMATION (ICRA), IEEE, 16 mai 2016 (2016-05-16), pages 1854-1859, XP032908400, DOI: 10.1109/ICRA.2016.7487330 * le document en entier * ----- | 1-14 | |
| A | EP 3 252 615 A1 (COMMISSARIAT ENERGIE ATOMIQUE) 6 décembre 2017 (2017-12-06) * le document en entier * ----- | 1-14 | DOMAINES TECHNIQUES RECHERCHES (IPC) |

Le présent rapport a été établi pour toutes les revendications

| Lieu de la recherche | Date d'achèvement de la recherche | Examinateur |
|---|---|---|
| **Berlin** | **25 janvier 2022** | **Huguet Serra, G** |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...............................................................................
& : membre de la même famille, document correspondant

EPO FORM 1503 03.82 (P04C02)

page 2 de 2

**ANNEXE AU RAPPORT DE RECHERCHE EUROPEENNE
RELATIF A LA DEMANDE DE BREVET EUROPEEN NO.**

EP 21 19 6463

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

25-01-2022

| Document brevet cité au rapport de recherche | | Date de publication | Membre(s) de la famille de brevet(s) | | Date de publication |
|---|---|---|---|---|---|
| EP 3252615 | A1 | 06-12-2017 | EP FR US | 3252615 A1 3052275 A1 2017352163 A1 | 06-12-2017 08-12-2017 07-12-2017 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3041451
- EP 3121762 A
- EP 3364213 A
- WO 2017050890 A

**Littérature non-brevet citée dans la description**

- **A. ELFES.** Occupancy grids: a stochastic spatial représentation for active robot perception. *Sixth Conférence on Uncertainty in AI,* 1990
- **T RAKOTOVAO ; J MOTTIN ; D PUSCHINI ; C LAUGIER.** Multi-sensor fusion of occupancy grids based on integer arithmetic. *Robotics and Automation (ICRA), 2016 IEEE International Conférence,* 1854-1859
- **COUÉ, C. ; PRADALIER, C. ; LAUGIER, C. ; FRAICHARD, T. ; BESSIÈRE, P.** Bayesian Occupancy Filtering for Multitarget Tracking: An Automotive Application. *The International Journal of Robotics Research,* Janvier 2006
- **PATHAK, K. ; BIRK, A. ; POPPINGA, J. ; SCHWERTFEGER, S.** 3D forward sensor modeling and application to occupancy grid based sensor fusion. *IEEE/RSJ International Conférence on Intelligent Robots and Systems,* Décembre 2007
- **ADARVE, J. D. ; PERROLLAZ, M. ; MAKRIS, A. ; LAUGIER, C.** Computing Occupancy Grids from Multiple Sensors using Linear Opinion Pools. *IEEE International Conférence on Robotics and Automation,* Mai 2012
- Grid-based multi-sensor fusion for on-road obstacle detection: application to autonomous driving. **FERNANDEZ, C. G. D. P.** Thèse de Master. KTH-CVAP et Volvo Car Corporation, Août 2015
- **BIRK, A ; CARPIN, S.** Merging occupancy grid maps from multiple robots. *Proceedings of the IEEE,* Juillet 2006, vol. 94 (7), 1384-1397
- **ANDRADA VALENTE DA SILVA.** SLAM and data fusion for autonomous vehicles : from classical approaches to deep lerning methods. Université Paris Sciences et Lettres, 2019
- **TRUNG-DUNG.** Vehicle Perception : Localization, Mapping with Detection, Classification and Tracking of Moving Objects. Institut National polytechnique de Grenoble, 2009